# EUROPÄISCHE PATENTSCHRIFT

(11) **EP 0 609 754 B1**
(45) Veröffentlichungstag und Bekanntmachung des Hinweises auf die Patenterteilung: **26.03.1997**
(21) Anmeldenummer: 94101038.1
(22) Anmeldetag: 25.01.1994
(51) Int. Cl.: B06B 1/04

(54) **Elektro-magnetischer Ultraschallwellenwandler**
Electromagnetic ultrasound transducer
Transducteur électromagnétique à ultrason

(30) Priorität: 05.02.1993 DE 4303293
(43) Veröffentlichungstag der Anmeldung: 10.08.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hübschen, Gerhard, Dr., D-66740 Saarlouis (DE); Hickethier, Manfred, D-66822 Lebach (DE)

(56) Entgegenhaltungen:
- US-A- 4 232 557
- US-A- 4 434 663
- MATERIALS EVALUATION, Oktober 1987 USA, B.W.MAXFIELD; A.KURAMOTO; J.K.HULBERT 'Evaluating EMAT designs for selected applications'

## Beschreibung

Die Erfindung betrifft einen elektro-magnetischen Ultraschallwellenwandler zur Anregung von senkrecht zur Einfallsebene polarisierten Transversalwellen gemäß dem Oberbegriff des Anspruchs 1, wie er aus der US-A 4,232,557 bekannt ist.

Ein ähnlicher elektro-magnetischer Ultraschallwellenwandler ist zum Beispiel aus der US-Z "Review of Progress in Quantitative Nondestructive Evaluation", Vol. 9, Seiten 815 bis 882 (1990) bekannt. Dabei wird eine Matrix von Permanentmagnetsegmenten verwendet, wobei unter jeweils einer Segmentabfolge eines Magneten eine Hochfrequenzspule angeordnet ist. Die Hochfrequenzspule eines einzelnen Segmentes ist als eine mäanderförmige Spule aufgebaut. Mit einem solchen elektro-magnetischen Ultraschallwellenwandler können transversale Ultraschallwellen erzeugt werden, die überwiegend in jeweils eine einzige Hauptrichtung beiderseits der Wandlermitte abgestrahlt werden.

Bei einer solchen Anordnung von zwei Reihen von Permanentmagneten, auf die eine Rechteckspule gewickelt ist, werden in elektrisch leitfähigen Materialien bei Betrieb der Spule mit Hochfrequenz-Strömen über Lorentzkräfte Teilchenauslenkungen angeregt, die zur Anregung von Ultraschallwellen führen. Dieser bekannte elektro-magnetische Ultraschallwellenwandler hat jedoch den Nachteil, daß die erzeugten Ultraschallwellen symmetrisch zur Wandlermitte nach beiden Seiten abgestrahlt werden. Damit ist z.B. in der Impuls-Echotechnik bei einem Winkelprüfkopf mit derartigem Sende- und Empfangswandler die Auswertung der Echosignale erschwert, da eine Zuordnung einzelner Signale zu einer Abstrahlrichtung bei einer festen Position des Prüfkopfes nicht erfolgen kann. Dies bedeutet, daß eine eindeutige Ortung eines auftretenden Materialfehlers nicht möglich ist. Dies kann dann nur durch Bewegen des Prüfkopfes in der Einfallsebene und durch Beobachtung der Laufzeitdynamik der einzelnen Echosignale erfolgen. Darüber hinaus wird das Bild der Echoanzeigen aufgrund der Vielzahl der auftretenden Signale unübersichtlich.

Aus den "IEE Proceedings" Vol. 134, A, No. 3 1987, Seiten 279 bis 282 ist eine weitere Anordnung von elektro-magnetischen Ultraschallwellenwandlern bekannt, mit der eine überwiegend einseitige Richtcharakteristik erzeugt werden kann. Hierfür wird eine doppelte Hochfrequenzspule eingesetzt, wobei eine Spule gegenüber der jeweils benachbarten Spule räumlich um ein Viertel der Wandlerperiode verschoben ist. Die beiden Hochfrequenzspulen werden durch identische Anregungssignale angesteuert, die voneinander durch einen Phasenunterschied von 90 Grad getrennt sind. Die beiden bidirektional ausgestrahlten Wellen interferieren in der einen Richtung konstruktiv und in der anderen Richtung auslöschend.

Der Empfänger verfügt dann in gleicher Weise über zwei identische Hochfrequenzspulen, die um den besagten Abstand wie beim Sendewandler räumlich verschoben angeordnet sind. Das von einer dieser Spulen aufgenommene Signal wird dann um 90 Grad gegenüber der anderen Empfangsspule phasenverschoben. Damit kann eine ebenfalls überwiegend einseitige Empfangscharakteristik erhalten werden.

Diese Anordnung ist jedoch nur geeignet, Transversalwellen zu erzeugen, die in der Einfallsebene polarisiert sind.

Aus der o.g. US 4,232,557 ist eine ähnliche Magnetanordnung bekannt, die sich jedoch in der Polarität der Magnete unterscheidet. Ebenfalls unterschiedlich sind die Wicklungen der HF-Spulen.

In dieser Anordnung sind mindestens vier Reihen von Permanentmagnetsegmenten vorgesehen, wobei zwei benachbarte Reihen von Magnetsegmenten jeweils um ein Viertel der Periodizität der einzelnen Permanentmagnete jeder Reihe entlang ihrer Längsachse verschoben sind, und wobei für jeweils benachbarte Permanentmagnetanordnungen eine eigene Nochfrequenzspule vorgesehen ist, die mit einem zwischen den beiden Hochfrequenzspulen um 90 Grad verschobenen Ultraschallsignal aufschlagbar sind.

Ausgehend von diesem Stand der Technik liegt der Erfindung die Aufgabe zu Grunde, den Wirkungsgrad der Ultraschallwellenwandler zu erhöhen.

Erfindungsgemäß wird diese Aufgabe mit dem Ultraschallwellenwandler nach Anspruch 1 gelöst.

Nachfolgend wird ein Ausführungsbeipiel der Erfindung anhand der Zeichnung beispielhaft näher erläutert. Es zeigen:
- Fig. 1: einen bekannten elektro-magnetischen Ultraschallwellenwandler für senkrecht zur Einfallsebene polarisierte Transversalwellen in einer Explosionsansicht mit bekannter Anordnung der Magnete und der Spulen,
- Fig. 2: einen elektro-magnetischen Ultraschallwellenwandler für senkrecht zur Einfallsebene polarisierte Transversalwellen mit einseitiger Richtcharakteristik gemäß einem Ausführungsbeispiel der Erfindung, und
- Fig. 3: eine schematische Darstellung der Ultraschall-Signalüberlagerung in Vorwärts- und Rückwärtsrichtung bezüglich der Mittelsymmetrieebene des Ultraschall-Wandlers.

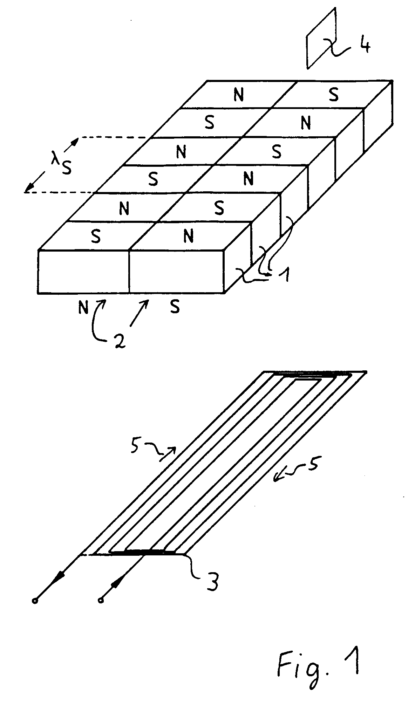

Die Figur 1 zeigt einen bekannten elektro-magnetischen Ultraschallwandler für senkrecht zur Einfallsebene polarisierte Transversalwellen mit periodisch angeordneten Permanentmagneten 1. Eine solche Magnetanordnung besteht zum Beispiel aus zwei Reihen 2 von Permanentmagneten 1, auf die eine Rechteckspule 3 gewickelt ist. Diese ist in der Explosionsansicht der Fig. 1 unterhalb der Magnetanordnung eingezeichnet. Die Beaufschlagung der Rechteckspule mit Hochfrequenzströmen, deren Richtung zu einem beispielhaft gewählten, festen Zeitpunkt mit dem Bezugszeichen 5 bezeichnet sind, erzeugt dann in elektrisch leitfähigen Materialien über Lorentzkräfte eine Teilchenauslenkung, die zu einer direkten Anregung von Ultraschallwellen führt. Die derart erzeugten Ultraschallwellen weisen eine zweiseitige Richtcharakteristik auf, die bezüglich der Wandlermitte symmetrisch ausgerichtet ist. Diese Wandlermitte ist anhand der Symmetrieebene hier mit dem Bezugszeichen 4 bezeichnet.

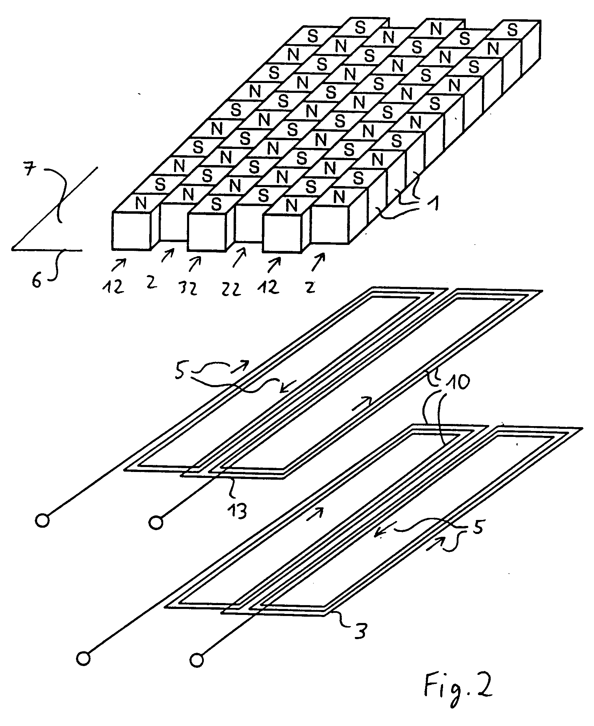

Die Fig. 2 zeigt eine der Fig. 1 vergleichbare Explosionsansicht eines Ultraschall-Wellenwandlers mit einer einzigen Richtcharakteristik gemäß der Erfindung. Es werden mehrere, mindestens vier, Reihen von periodisch angeordneten Permanentmagneten 1 verwendet. In dem hier dargestellten Ausführungsbeispiel sind sechs Reihen vorgesehen, die mit den Bezugszeichen 2, 12, 22 und 32 bezeichnet sind. Es kann auch jede andere, vorzugsweise gerade Anzahl von Reihen 2, 12, 22 und 32 verwendet werden.

Wie aus der Fig. 2 zu erkennen ist, sind jeweils benachbarte Reihen 2 und 12, bzw. 12 und 22, bzw. 22 und 32, bzw. 32 und 2 um die halbe Breite eines einzelnen Permanentmagneten 1 verschoben angeordnet. Durch die um ein Viertel, zwei Viertel, bzw. drei Viertel der Magnetsegmentgröße bezüglich einer Grundlinie 6 verschobenen Segmente ist zu erkennen, daß sich eine der ersten Reihe 2 entsprechende Permanentmagnetanordnung nach genau vier Reihen wiederholt. Die bei diesem Ausführungsbeispiel sich wiederholenden Reihen sind daher in der Fig. 2 mit dem gleichen Bezugszeichen 2 bzw. 12 versehen.

Im folgenden werden die erfindungsrelevanten Maßnahmen erläutert. Zwei Permanentmagnetanordnungen 2 und 22, deren einzelne Magnete bezüglich der Grundlinie 6 auf gleicher Höhe allerdings mit unterschiedlicher Polarität zueinander angeordnet sind, sind mit einer Rechteckspule 3 derart gewickelt, daß von Reihe zu Reihe auch die Stromrichtung gemäß dem Bezugszeichen 5 alterniert. Auf die bei diesem Ausführungsbeispiel verbleibenden drei Reihen mit den Bezugszeichen 12 und 32, wird eine zweite Doppel-Rechteckspule 13 verschachtelt zu der ersten Rechteckspule 3 angebracht, bei der wiederum die Stromrichtung bei den zugeordneten Permanentmagnetanordnungen von Magnetreihe zu Magnetreihe alterniert. Die beiden Hochfrequenzspulen 3 und 13 werden im Sendefall mit zueinander um 90 Grad phasenverschobenen Sendestromsignalen, sogenannten Burstsignalen, betrieben.

Im Gegensatz hierzu weisen die Magnetreihen nach der US 4,232,557 gleiche Polarität auf und sind nur um λ/4 verschoben, und die Drähte der HF-Spulen sind um die Magnete gewickelt.

Die Fig. 2 zeigt eine besondere Ausgestaltung der Anordnung der Spulendrähte 10 der Rechteckspulen 3 und 13. Die Spulendrähte 10 sind aus einem einzigen Draht in den zwei rechteckigen Spulen angeordnet, wobei sich in der Mitte beim Zusammentreffen der Rechteckspulen 3 und 13 die doppelte Anzahl von Spulendrähten 10 befindet.

Die sich nun einstellende Richtcharakteristik der abgestrahlten Ultraschallwellen hängt von der gewählten Größenordnung der Magnete und der Hochfrequenz ab. Typische Magnetanordnungen haben eine Magnetreihenbreite von 2 bis 3 Millimetern. Bei einer Beaufschlagung der Spule mit einer Frequenz des Speisesignals von zum Beispiel 1,4 MHz kann ein Abstrahlungswinkel von 50 Grad zur Ebene 7 der Unterseite der Permanentmagnetanordnungen erreicht werden Bei einer Veränderung der Frequenz des Speisesignals bis zu 1 Mhz kann der Abstrahlungswinkel des Ultraschallsignals bis hin zu einer streifenden Abschallung verschoben werden Bei diesen Ultraschallwellen handelt es sich um Transversalwellen, die bei der zerstörungsfreien Materialprüfung den Vorteil aufweisen, keiner das Meßsignal verändernden Modenumwandlung zu unterliegen.

Durch die räumliche Verschiebung der Ultraschallquellen um ein Viertel der Wellenlänge, die man aufgrund der bezüglich der Grundlinie 6 verschobenen Magnetanordnung erhält, ergibt sich in der einen Abstrahlrichtung eine Phasendifferenz der Signale um 180 Grad, das heißt eine Auslöschung der Signale, wohingegen sich in der anderen Abstrahlrichtung eine konstruktive Überlagerung der Signale mit einer Phasendifferenz von 0 bzw. 360 Grad einstellt.

Im Empfangsfall werden die über die beiden separaten Hochfrequenzspulen 3 bzw. 13 empfangenen Echosignale zueinander elektronisch um die genannten 90 Grad zeitverzögert und phasenrichtig aufaddiert.

Bei einem vorteilhaften Ultraschallwellenwandler wird bei einer Verwendung von mehr als vier Reihen von Permanentmagnetsegmenten 2, 12, 22 und 32 jede Hochfrequenzspule 3 bzw. 13 mäanderförmig ausgestaltet, so daß die notwendigen Zuleitungen und Übergangssegmente 41 klein und kurz gehalten werden.

Darüberhinaus ist die Breite jeder Reihe von Permanentmagnetsegmenten 2, 12, 22 und 32 vorzugsweise klein gegenüber ihrer Länge gewählt, so daß die genannten Übergangssegmente 41 jeder Hochfrequenzspule 3 bzw. 13 zwischen zwei zugehörigen Permanentmagnetreihen 2 und 22 bzw. 12 und 32 klein gegenüber der Länge jeder Reihe von Permanentmagnetsegmenten ist.

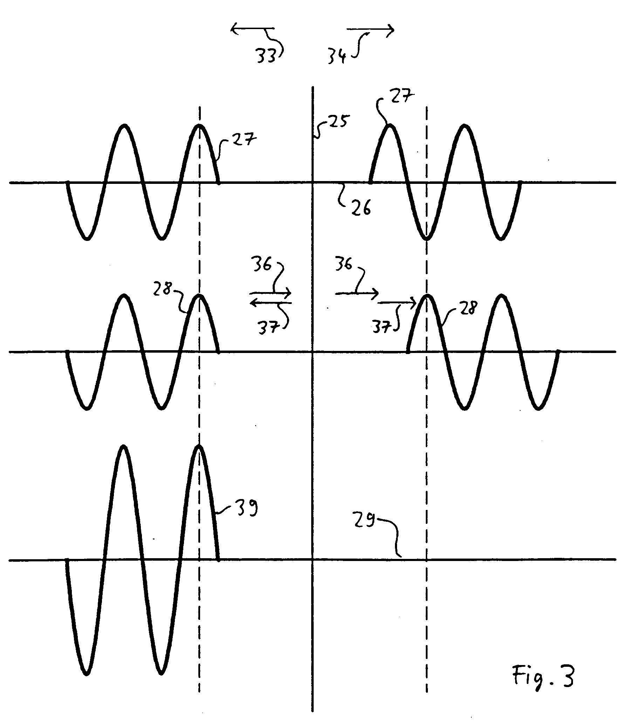

Die Fig. 3 zeigt eine Ultraschallüberlagerung bei einer Vorrichtung nach Fig. 2. Die schematische Darstellung geht von der Mitte des Wandlers 25 aus, die der Ebene 4 entspricht, wobei die mit dem Bezugszeichen 26 versehene Achse die gewünschte Hauptachse der Richtcharakteristik in die so bezeichnete Vorwärtsrichtung 33 sowie die Rückwärtsrichtung 34 bezüglich der Mittelachse 25 ist. Neben der fluchtenden Ausstrahlung eines Ultraschallsignals ist in derselben Weise auch jeder andere Abstrahlungswinkel einstellbar.

Mit dem Bezugszeichen 27 ist das Sendesignal der ersten Hochfrequenzspule 3 bezeichnet. In der diagrammartigen Zeichnung ist darunter mit dem Bezugszeichen 28 das Sendesignal der zweiten Hochfrequenzspule 13 bezeichnet.

Wie aus der Fig. 3 zu erkennen ist, ist dieses Sendesignal 48 in seiner Phase verschoben. Zum einen besteht eine auf beiden Seiten 33 und 34 des Wandlers gleichgerichtete Verschiebung um 90 Grad aufgrund der Verschiebung der Reihen der Magnetanordnungen 2 und 22 zu 12 und 32 zueinander, die in ihrer Richtung mit dem Bezugszeichen 36 angedeutet ist Zu dieser Verschiebung addiert sich eine ebenfalls 90 Grad umfassende Phasendrehung 37 des Sendesignals der zweiten Spule 13, die auf der rückwärts 34 gerichteten Seite addiert, auf der vorwärts 33 gerichteten Seite des Wandlers subtrahiert wird.

Damit ergibt sich eine Amplitude der Ultraschallwelle in der Abstrahlrichtung als Summensignal der beiden Spulensignale. Wie aus der untersten Zeichnung der Fig. 3 zu erkennen ist, führt dies auf der rückwärts gerichteten Seite 34 zu einer Auslöschung 29 der Signalamplituden, so daß kein Ultraschall in dieser Richtung entsteht wohingegen sich auf der vorwärts gerichteten Seite 33 des Wandlers die genannten Ultraschallamplituden addieren und so zu einem großen Ultraschallsignal 39 beitragen.

## Patentansprüche

1. Elektro-magnetischer Ultraschallwellenwandler zur Anregung von senkrecht zur Einfallsebene polarisierten Transversalwellen mit einer einseitigen Richtcharakteristik, mit einer Anordnung von mindestens vier Reihen (2, 12, 22, 32) von Permanentmagnetsegmenten (1) mit mindestens einer Hochfrequenzspule (3, 13), wobei zwei benachbarte Reihen (2, 12; 12, 22; 22, 32; 32, 2) von Magnetsegmenten jeweils um ein Viertel der Periodizität der einzelnen Permanentmagnete (1) jeder Reihe (2, 12, 22, 32) entlang ihrer Längsachse verschoben sind, und für jeweils benachbarte Permanentmagnetanordnungen (2, 22 bzw. 12, 32) eine eigene Hochfrequenzspule (3, bzw. 13) vorgesehen ist, die im Sendefall mit zwischen den beiden Hochfrequenzspulen (3, 13) um 90 Grad verschobenen elektrischen Burstsignalen und im Empfangsfall mit einem um 90 Grad verschobenen Ultraschallsignal (27, 28) aufschlagbar sind, **dadurch gekennzeichnet**,
daß jeweils zwei benachbarte Magnetreihen die gleiche Polarität besitzen und die beiden nächsten Magnetreihen gegenüber den ersten beiden Reihen alternierende Polarität haben,
und daß die HF-Spulen unterhalb der Magneten angebracht sind und von Magnet zu Magnetreihe mit alternierendem Windungssinn mäanderförmig gewickelt sind.

2. Ultraschallwellenwandler nach Anspruch 1,
**dadurch gekennzeichnet**,
daß die beiden Hochfrequenzspulen (3, bzw. 13) ineinander verschachtelt sind.

3. Ultraschallwellenwandler nach einem der Ansprüche 1 bis 2,
**dadurch gekennzeichnet**,
daß die Breite jeder Reihe von Permanentmagnetsegmenten (2, 12, 22, 32) klein gegenüber ihrer Länge ist, so daß die Übergangssegmente (41) jeder Hochfrequenzspule (3, 13) zwischen zwei zugehörigen Permanentmagnetreihen (2, 22; 12, 32) klein gegenüber der besagten Länge ist.

## Claims

1. Electromagnetic ultrasound transducer for the excitation of transverse waves polarized perpendicular to the plane of incidence with a one-sided directional characteristic, with an arrangement of at least four rows (2,12,22,32) of permanent magnet segments (1) with at least one high frequency coil (3,13), two neighbouring rows (2,12; 12,22; 22,32; 32,2) of magnet segments being in each case displaced by a quarter of the periodicity of the individual permanent magnets (1) of each row (2,12,22,32) along their longitudinal axis, and neighbouring permanent magnet arrangements (2,22 or 12,32) being each provided with their own high frequency coil (3, or 13), which in the case of transmission can be acted on by electrical burst signals, displaced by 90 degrees between the two high frequency coils (3,13) and in the case of receiving with an ultrasound signal (27,28) displaced by 90 degrees, **characterised in that**
each two neighbouring magnet rows have the same polarity and the two next rows have alternating polarity in relation to the first two rows, and that the HF-coils are fitted below the magnets and wound from magnet to magnet row with alternating direction of winding.

2. Ultrasound transducer according to claim 1,
**characterised in that**
the two high frequency coils (3, or 13) are interleaved with one another.

3. Ultrasound transducer according to one of claims 1 to 2,
**characterised in that**
the width of each row of permanent magnet segments (2,12,22,32) is small in relation to its length, and thus the transition segments (41) of each high frequency coil (3,13) between two associated permanent magnet rows (2,22; 12,32) are small in relation to the aforementioned length.

## Revendications

1. Transducteur électromagnétique à ultrasons pour l'excitation d'ondes transversales polarisées perpendiculairement au plan d'incidence, avec une caractéristique directionnelle unilatérale, un dispositif d'au moins quatre rangées (2, 12, 22, 32) de segments d'aimants permanents (1) avec au moins une bobine haute fréquence (3, 13), deux rangées voisines (2, 12 ; 12, 22 ; 22 32 ; 32, 2) de segments d'aimants étant décalées chaque fois d'un quart de la période des différents aimants permanents (1) de chaque rangée (2, 12, 22, 32) suivant leur axe longitudinal et, pour chaque fois les dispositifs d'aimants permanents voisins (2, 22 ou 12, 32), il est prévu une bobine haute fréquence propre (3, 13) qui reçoit, en cas d'émission, des signaux électriques de salve décalés de 90 degrés entre les deux bobines haute fréquence (3, 13) et, en cas de réception, un signal d'ultrasons (27, 28) décalé de 90 degrés,
caractérisé en ce que
chaque fois deux rangées d'aimants voisines ont la même polarité et les deux rangées d'aimants voisines ont une polarité alternée par rapport aux deux premières rangées, et en ce que les bobines HF sont montées sous les aimants et ont un enroulement en méandres dont le sens d'enroulement alterne entre l'aimant et la rangée d'aimants.

2. Transducteur à ultrasons selon la revendication 1,
caractérisé en ce que
les deux bobines haute fréquence (3, 13) sont imbriquées.

3. Transducteur à ultrasons selon l'une des revendications 1 et 2,
caractérisé en ce que
la largeur de chaque rangée de segment d'aimants permanents (2, 12, 22, 32) est petite par rapport à sa longueur, et les segments de jonction (41) de chaque bobine haute fréquence (3, 13) entre deux rangées d'aimants permanents correspondants (2, 22 ; 12, 32) est petite par rapport à cette longueur.
